# EUROPEAN PATENT SPECIFICATION

(11) **EP 0 875 782 B1**
(45) Date of publication and mention of the grant of the patent: **21.09.2005**
(21) Application number: 98303286.3
(22) Date of filing: 28.04.1998
(51) Int. Cl.: G02F 2/00

(54) **Wavelength converter**
Wellenlängenkonverter
Convertisseur de longueur d'onde

(30) Priority: 28.04.1997 JP 11163397
(43) Date of publication of application: 04.11.1998
(73) Proprietor: NEC CORPORATION, Tokyo (JP)
(72) Inventor: Ueno, Yoshiyasu, Minato-ku, Tokyo (JP); Tajima, Kazuhito, Minato-ku, Tokyo (JP)
(74) Representative: W.P. Thompson & Co.

(56) References cited:
- EP-A- 0 718 669
- PATEL N S ET AL: "40-GB/S DEMULTIPLEXING USING AN ULTRAFAST NONLINEAR INTERFEROMETER (UNI)" IEEE PHOTONICS TECHNOLOGY LETTERS,US,IEEE INC. NEW YORK, vol. 8, no. 12, 1 December 1996 (1996-12-01), pages 1695-1697, XP000679552 ISSN: 1041-1135
- TAJIMA T ET AL: "Ultrafast polarization-discriminating Mach-Zehnder all-optical switch" APPLIED PHYSICS LETTERS, 18 DEC. 1995, AIP, USA, vol. 67, no. 25, pages 3709-3711, XP002131757 ISSN: 0003-6951
- DURHUUS T ET AL: "ALL-OPTICAL WAVELENGTH CONVERSION BY SEMICONDUCTOR OPTICAL AMPLIFIERS" JOURNAL OF LIGHTWAVE TECHNOLOGY,US,IEEE. NEW YORK, vol. 14, no. 6, 1 June 1996 (1996-06-01), pages 942-954, XP000598498 ISSN: 0733-8724

## Description

The present invention relates to a wavelength converter which is suitable for use in a wavelength division multiplex (WDM) optical communication system. The invention has particular, but not exclusive, application to a wavelength converter for use in highspeed WDM optical communication.

In recent years, WDM optical communication systems have begun to be developed as mass optical communication systems. In WDM optical communication, each wavelength in a light signal whose wavelength is multiplexed is allocated to each communication channel, and therefore, in order to transmit or receive a signal between channels, it is necessary to convert the wavelength of an original signal string to the wavelength corresponding to a specified channel. In previous proposals, this signal wavelength conversion has been performed by first converting optical signals to electric signals, and then converting the electric signals to optical signals having a different wavelength.

On the other hand, research has recently been made on a device designed to convert the wavelengths of optical signals directly, without first converting them to electric signals. There have, for example, been proposed interaction-type devices, such as a symmetrical Mach-Zender type device, and a polarization-discrimination type device.

The symmetrical Mach Zender type wavelength converter has been reported as an optical switch ("Applied Physics Letters," by S. Nakamura et al., vol. 67, pp. 2445), which also has the feature of being a wavelength converter, since it outputs signal pulses having wavelengths different from those of input signal pulses. This symmetrical Mach-Zender type wavelength converter is hereinafter referred to as a first previously proposed wavelength converter.

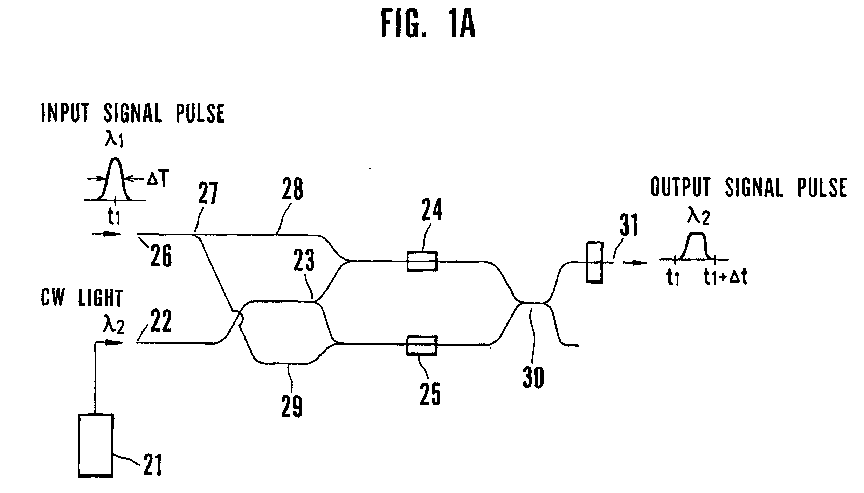

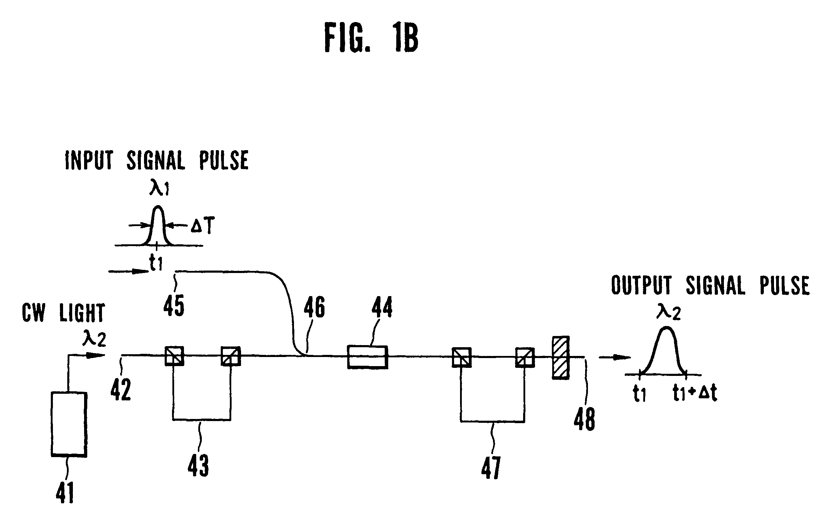

Reference will now be made to Figs. 1A and 1B of the accompanying drawings in which:-
Fig. 1A is a block schematic circuit diagram illustrating a first previously proposed wavelength converter, and
Fig. 1B is a block schematic circuit diagram illustrating a second previously proposed wavelength converter.

Referring to Fig. 1A there are shown two waveguides 24 and 25 which cause changes of non-linear refractive indices (hereinafter referred to as non-linear waveguides) which are arranged in the respective arms of a Mach Zender interferometer. If continuous wave (CW) light having a wavelength λ2 and being output from a CW light source 21 enters from a CW light input port 22, it is caused to branch in a branch section 23 so that each light beam is introduced into the non-linear waveguide 24 or 25. On the other hand an original signal, in the form of an input signal pulse having a wavelength λ1 is entered from a signal input port 26. The input signal pulse is caused to branch in a branch section 27, and is transmitted through an optical path 28 or 29 and introduced to the non-linear waveguide 24 or 25, so as to change the refractive index of the non-linear waveguide 24 or 25 for a fixed period of time. Assuming that Δt is a delay time generated between input signal pulses transmitted through two optical paths due to an optical path difference between the optical paths 28 and 29, if the pulse width ΔT of an input signal pulse is sufficiently shorter than Δt, entering the input signal pulse into the signal input port 26 at time tl, for example, results in an output signal pulse being output with a wavelength λ2 and with a first transition at the time tl and a last transition at the time tl+Δt. In this manner, the wavelength converter of the first previous proposal converts the wavelength λ1 to the wavelength λ2. A wavelength converter which is disclosed in Japanese Non-examined Patent Publication No. 7-199240 to Nakamura, is similar to the above, except that an optical delay section having two optical paths 28 and 29 is arranged differently from that shown in Fig. 1A.

Furthermore, a second previously proposed converter in the form of a polarization-discrimination type wavelength converter, such as that shown in Fig. 1B, is also reported as an optical switch, (see "Applied Physics Letters," by T. Tajima et al., vol. 67, no. 25, pp. 3709-3711, 1995 and "IEEE Photonics Technology Letters," by N.S. Patel et al., vol. 8, pp. 1695 - 1697, 1996), although it too serves as a wavelength converter in a similar manner to the above-mentioned symmetrical Mach Zender type converter. It differs from the wavelength converter of the first previous proposal in that a specifically polarized light component is delayed by Δt using a polarization-discrimination delay circuit 43 and then advanced by Δt using a polarization-discrimination delay circuit 47 to resume the previous state. After an input signal pulse having a wavelength λ1 is entered into the signal input port 45 at time tl by these actions, it becomes possible to perform a wavelength conversion in which output signal pulses at time tl to time tl+Δt can be output from a signal output port 48 in a manner comparable to that of the wavelength converter of the first previous proposal by using only a single non-linear waveguide 44. For example, assuming that the polarization-discrimination delay circuit 43 is used to perform a polarization-discrimination and a delay for an input light of an S polarized light, and that the polarization-discrimination delay circuit 47 is used to perform a polarization-discrimination and a delay for an input light of a P polarized light, the operations are as follows: if a CW light having a wavelength λ2 is entered from a CW light source 41, the polarization-discrimination delay circuit 43 performs a delay by Δt only for S polarized light components of the CW light and then the components are introduced to a non-linear waveguide 44, while an input signal pulse having a wavelength λ1 is entered with a pulse width ΔT which is efficiently shorter than Δt into a signal input port 45 and introduced to the non-linear waveguide 44 via a combiner section 46 so as to change a refractive index of the non-linear waveguide 44. When the CW light passes through the non-linear waveguide 44, only the P polarized light components are given a delay of Δt, in other words, the S polarized light components are advanced by At, by which the above output signal pulses are output from the signal output port 48.

The above-mentioned wavelength converters of the first and second previous proposals however, have problems as will be described below, respectively.

The wavelength converter of the first previous proposal has a problem in that the configuration is complicated due to the fact that there are two non-linear waveguides 24 and 25. In addition, it is necessary strictly to control the balance between the refractive indices (therefore the phase of a transmitted signal pulse) and the changes of the non-linear refractive indices of each of the two non-linear waveguides 24 and 25. If waveguides are operated for a long time using semiconductor as materials for the waveguides, for example, the refractive indices of the semiconductor waveguides tend to change little by little. Such slight changes or differences between the refractive indices of the two non-linear waveguides significantly upsets the operating conditions in the wavelength converter of the first previous proposal, and therefore the long-time continuous change of the refractive indices becomes a significant problem, and a precise control circuit is required in order to adjust the difference between the refractive indices of each of the two non-linear waveguides.

On the other hand, the wavelength converter of the second previous proposal includes only a single non-linear waveguide 44, and it therefore has a more simple configuration and is more easy to control compared to the first previous proposal. The wavelength converter of the second previous proposal, however, has the problems that it is necessary to arrange the elements used for polarization-discrimination in the polarization-discrimination delay circuits 43 and 47 in the particular configuration, and that it is necessary to set an axis of each polarization-discrimination delay circuit according to the polarization of the input CW light.

Features of a wavelength converter to be described below by way of example in illustration of the present invention are that it has a simple configuration without any need for polarization-discrimination elements and that it does not depend on the polarization of the input CW light.

In one arrangement to be described below by way of example in illustration of the present invention a wavelength converter includes a waveguide which causes a change of a non-linear refractive index, a delay interference circuit having two optical paths of different optical path lengths, and a CW light source, wherein a coherent length (ΔL_{C}=v_{g}/Δυ where v_{g} being the speed of the CW light in the delay interference circuit) determined by a spectral line with (Δυ) of CW light output from the CW light source is longer than an optical path difference (ΔL_{d}) between the two optical paths in the delay interference circuit (ΔL_{C}>ΔL_{d}).

In a particular arrangement to be described below by way of example in illustration of the present invention a wavelength converter includes a signal input port for entering an input signal pulse which is an original signal whose wavelength is required to be converted for the waveguide which causes a change in the non-linear refractive index, wherein the optical path difference ΔL_{d} is determined by the formula, ΔL_{d}=v_{g}T₀/2 (where T₀ indicates an interval between the input signal pulses) with the speed (v_{g}) being of the CW light in the delay interaction circuit and the input signal pulse being entered via the signal input port.

A primary effect of the wavelength converter illustrative of the present invention and having these configurations is to convert one wavelength to another by causing two CW light beams to interfere with each other after being output from the CW light source at different times.

The following description and drawings disclose, by means of examples, the invention which is characterised in the appended claims, whose terms determine the extent of the protection conferred hereby.

In the drawings:-
Fig. 2 is a block schematic circuit diagram of a wavelength converter,
Figs. 3A, 3B, 3C, and 3D are graphical diagrams for use in illustrating the operation of the arrangement shown in Fig. 2, and
Fig. 4 is a graphical diagram for use in illustrating the operation of another arrangement.

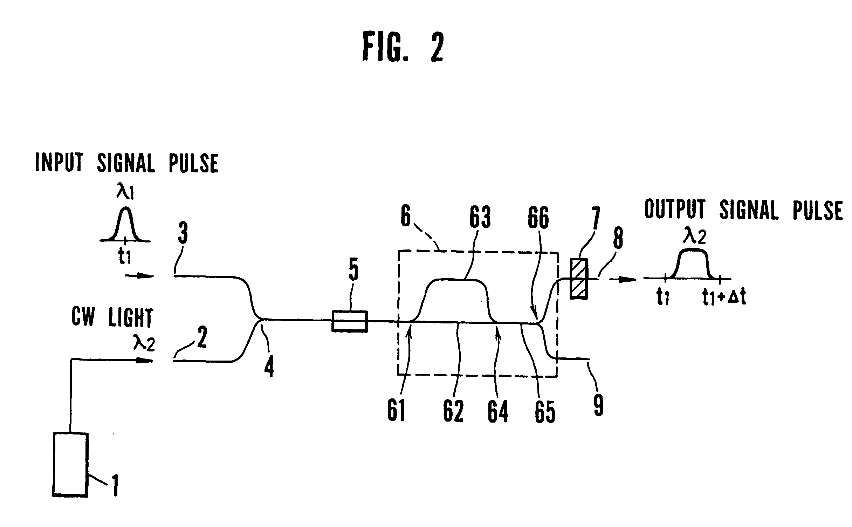

A wavelength converter of a first arrangement illustrative of the present invention will now be described with reference to Fig. 2. The wavelength converter of Fig. 2 has only one non-linear waveguide 5 and no elements for the isolation and the combination of polarized light.

As shown in Fig. 2, the wavelength converter of this embodiment includes a CW light source 1 for outputting CW light having a wavelength λ2, a CW light input port 2 for entering the CW light output from the CW light source 1, a signal input port 3 into which an input signal pulse having a wavelength λ1 is entered, a non-linear waveguide 5 into which the CW light and the input signal pulse are entered via a branch section 4, a delay interference circuit 6 for performing a delay interference for light output from the non-linear waveguide 5, a wavelength filter 7, a signal output port 8 for outputting light whose wavelength has been converted, and an output port 9 for outputting unnecessary light.

The delay interference circuit 6 has a branch section 61 for branching input light in the ratio of one to one, an optical path 62 for transmitting one beam of the light which has been branched in the branch section 61, an optical path 63 for transmitting the other beam of the light which has been branched in the branch section 61, a combiner section 64 for combining the light which has been transmitted through these two optical paths 62 and 63, a delay interaction section 65 for causing light delayed in one of the optical paths due to an optical path difference between the two optical paths 62 and 63 and light transmitted through the other optical path to interfere with each other, and a branch section 66 for branching light so as to output light, including a required output signal pulse to the filter 7 and unnecessary light to the output port 9.

The non-linear waveguide 5, may, for example, be a semiconductor light amplifier in which current is injected, or an absorption type semiconductor waveguide in which current is not injected. As an example of a semiconductor heterostructure waveguide which is used as the semiconductor light amplifier or the absorption type semiconductor waveguide, there is a waveguide having a structure in which an In_{0.63}Ga_{0.37}As_{0.80}P_{0.20} bulk active layer, having a thickness of 20 to 100 nm or so, is sandwiched between InP cladding layers. Instead of the bulk active layer, a quantum well active layer can be used. While In_{0.63}Ga_{0.37}As_{0.80}P_{0.20} is a material composition suitable for amplifying or absorbing a signal in a 1.5 µm wavelength band, another composition of an InGaAsP mixed crystal, or another mixed crystal semiconductor, can be used according to the signal wavelength. The branch section 4 to the non-linear waveguide 5 may include, for example, a quartz waveguide, a semiconductor waveguide, or an optical fibre coupler. In the same manner, the non-linear waveguide 5 to the signal output port 8 via the delay interference circuit 6 may include a quartz waveguide, a semiconductor waveguide, or an optical fibre coupler.

In the wavelength converter of this embodiment having the above configuration, a wavelength is converted to another as described below.

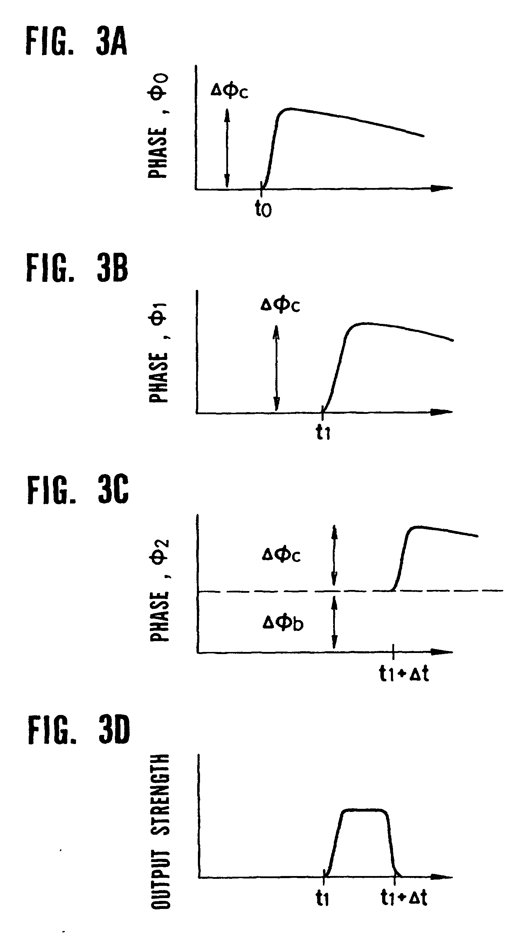

An input signal pulse having a wavelength λ1, which is an original signal whose wavelength is to be converted by the wavelength converter, is entered into the signal input port 3 so as to change the carrier density of the non-linear waveguide 5, by which the refractive index is changed. CW light, having a wavelength λ2, output from the CW light source 1, and having a wavelength λ2 enters into the CW light input port 2, is passed through the non-linear waveguide 5, and is then caused to branch in the ratio of one to one by the branch section 61 of the delay interference circuit 6. In relation to the light which has been branched by the branch section 61, the CW light passing through one of the optical paths (arm) 63 is delayed at Δt in comparison with CW light which passes through the other optical path (arm) 62, and afterwards they are combined in the combiner section 64. These two CW light beams, which have been combined in the combiner section 64, then interfere with each other in the delay interference section 65, as described below, assuming that the recovery time (ΔT') of the carrier density of the non-linear waveguide 5 is long enough in comparison with an input signal pulse width (ΔT), for simplification. Figs. 3A to 3D indicate the time transitions of phases of the CW light passing through the non-linear waveguide 5 and the two CW light beams arriving at the combiner section 64. First, a phase (Φ₀) of the CW light passing through the non-linear waveguide 5 changes by ΔΦ_{c} due to an input signal pulse which arrives at the non-linear waveguide 5 at a time t₀, as shown in Fig. 3A. A phase (Φ₁) of the CW light passing through one arm 62 in the delay interference circuit 6 changes in the same manner as for one shown in Fig. 3A at a time t₁(=t₀ + T^{P}) in the combiner section 64, as shown in Fig. 3B, assuming that T^{P} is a time period required for the CW light to travel from the non-linear waveguide 5 to the combiner section 64. On the other hand, a phase (Φ₂) of the CW light passing through the other arm 63 in the delay interference circuit 6 is further delayed by Δt=ΔL_{d}/v_{g} (where ΔL_{d} is the optical path difference of the delay interference circuit 6, and Vg is the speed of the CW light travelling through the delay interference circuit 6) in comparison with the light passing through the arm 62, as shown in Fig. 3C. Therefore, the two CW light beams to be combined at time t₁ in the combiner section 64 have been output from the CW light source 1 at a time which differs by Δt.

In this embodiment, it is assumed that a spectral line width (Δυ) of the CW light source 1 is short enough so that the coherent length ΔL_{C} has a relationship given by a formula (1).${\text{ΔL}}_{\text{C}} {\text{= v}}_{\text{g}} {\text{/Δυ > ΔL}}_{\text{d}}$

Therefore, it is necessary to satisfy a formula (2) based on the formula (1).${\text{Δυ < Δt}}^{\text{-1}}$

For example, supposing that a repetitive frequency of an input signal pulse is 40 Gb/s, Δt is equal to 10 ps, ΔL_{d} is equal to 1.9 mm, Δυ can be smaller than 100 GHz (Δυ < 100 GHz). If a distributed feed-back (DFB) type semiconductor laser is used as the CW light source 1, Δυ is 100 kHz to 10 MHz or so and therefore this relationship can easily be satisfied. In the above calculation, ng=1.6 and v_{g}=c/n_{g} are used for a group velocity refractive index, assuming that a quartz waveguide is used for the delay interference circuit 6. If the above relationship is satisfied, two CW light beams generated at different times interfere with each other very well.

In this manner, an optical signal of an interference light strength shown in Fig. 3D is output from the signal output port 8. In order to erase a signal output at a time t<tl and a time t<tl+Δt, it is assumed that a bias phase ΔΦ_{b}=π. An output signal strength is proportional to sin²ΔΦ_{c}.

The wavelength filter 7 is arranged in order to remove input signal pulses. Instead of the wavelength filter, a polarization filter can be used. If an absorption type waveguide is used as the non-linear waveguide 5, the above filter is unnecessary, since input signal pulses are absorbed by the non-linear waveguide 5.

The output port 9 in Fig. 2 is an output port used for discarding excess CW light. This output port 9 is provided to prevent excess CW light from reflecting towards the signal input port 3 when CW light is not output to the signal output port 8 due to a balanced interference.

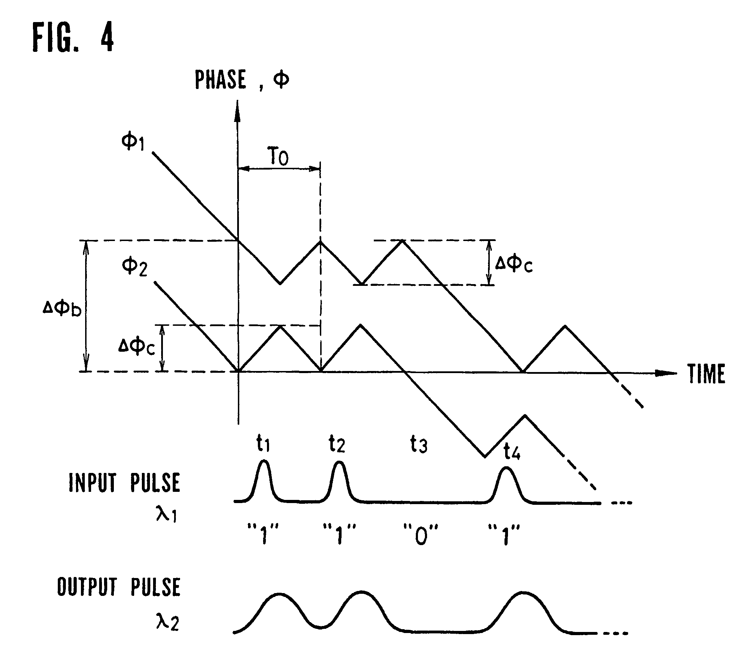

A wavelength converter of a second embodiment illustrative of the present invention by way of example is the same as the wavelength converter of the first embodiment, except that an optical path difference ΔL_{d} is assumed to be equal to v_{g}T₀/2 (ΔL_{d}= v_{g}T₀/2) and that different operating conditions are applied to the non-linear waveguide 5, where T₀ is a pulse interval between input signal pulses. Fig. 4 shows the phase transition of two CW light beams directly before being combined when four binary signal pulses "1101" are to be entered utilizing a semiconductor light amplifier as the non-linear waveguide 5. In this embodiment, when using the semiconductor light amplifier as the non-linear waveguide 5, a time period of a decreasing refractive index caused by an input signal pulse (equivalent to input signal pulse width ΔT) is equalized to a later recovery time of the refractive index by a current injection (ΔT'). Therefore, a relation of T=ΔT'=T₀/2 is obtained. Under this condition, electric field intensities of the two CW light beams are represented by the following formulas (3) and (4).${\text{E}}_{\text{1}} \text{(t) =} {\overline{\text{E}}}_{\text{0}} {\text{exp(-i Φ}}_{\text{1}} \text{) =} {\overline{\text{E}}}_{\text{0}} {\text{exp(-i Δω}}_{\text{e}} {\text{t+Φ}}_{\text{b}} \text{)}$${\text{E}}_{\text{2}} \text{(t) =} {\overline{\text{E}}}_{\text{0}} {\text{exp(-i Φ}}_{\text{2}} \text{) =} {\overline{\text{E}}}_{\text{0}} {\text{exp(i Δω}}_{\text{e}} \text{t)}$

Accordingly, assuming that a bias phase ΔΦ_{b} is equal to π based on the formulas (3) and (4), an electric field after the interaction is expressed by a formula (5).${\text{E}}_{\text{int}} {\text{= E}}_{\text{1}} {\text{(t)+E}}_{\text{2}} \text{(t) = 2} {\overline{\text{E}}}_{\text{0}} {\text{sin(Δω}}_{\text{e}} \text{t)}$

As is apparent from the formula (5), the signal conversion efficiency is the highest when a phase shift amount (ΔΦ_{c}=ΔωₑΔT) is equal to π/2. The time transition of an output pulse strength based on the formula (5) is as shown in Fig. 4. In addition, from the formula (5), it is apparent that the wavelength conversion output pulse does not have any wavelength chirping. As an example of the operating condition, an injected current I_{0P}^{π/2} required for recovering a π/2 phase shift is 550 mA, assuming that an input pulse energy P_{π} required for a π phase shift in an absorption type waveguide is 10 pJ, ΔT is 10 ps (equivalent to a signal pulse repetitive frequency 50 Gb/s based on a repetitive frequency T₀=2ΔT), and the optical wavelength is 1.55 µm.

A phase transition in utilizing the absorption type waveguide as the non-linear waveguide is the same as the transition shown in Fig. 4, except that codes are inverted (the high and low relation of the curve in the diagram is inverted). In this phase transition, the recovery time for a change of a refractive index depends upon a life (τ_{c}) of an optical excitation carrier in the material of the waveguide, and therefore τ_{c} is controlled to satisfy the relation of ΔT=ΔT'. As an example, assuming that ΔT is 1 ps and an average carrier density in a semiconductor active layer is 1 x 10¹⁹ cm⁻³, a carrier life τ_{c} required for ΔT=ΔT' is approx. 340 ps. The life τ_{c} is much longer than ΔT, and therefore a change of the refractive index following a change of the carrier density is an almost linear line, as shown in Fig. 4. The carrier life τ_{c} can, for example, be controlled by the application of an electrostatic field, impurity doping, ion injection, low temperature growing, or the application of an average carrier density. In this embodiment, an electrostatic field of approx. 10 kV/cm, for example, is applied so as to emit carriers (Reference: "Applied Physics Letters," by S. Nakamura et al., vol. 62, no. 9, pp. 925-927, 1993).

As set forth hereinabove, the wavelength converter described above by way of example in illustration of the present invention includes only a single non-linear waveguide and does not need elements for the isolation of polarized light. Therefore, it has a very simple configuration, by which it can be manufactured easily and controlled to be stable.

The wavelength converter which has been described above in illustration of the present invention does not have any dependency on light polarization. Therefore CW light and an input signal pulse light polarized in an arbitrary direction can be entered therein. In other words, it is not necessary to control the polarization direction of the CW light and the input signal pulse light.

Furthermore, the wavelength converter which has been described above in illustration of the present invention can output wavelength conversion signals having no wavelength chirping, and therefore it can contribute to a long-distance transmission having reduced signal distortion.

It will be understood that, although particular embodiments have been described, by way of example in illustration of the invention, variations and modifications thereof, as well as other embodiments may be conceived within the scope of the appended claims.

## Claims

1. A wavelength converter including a continuous wave (CW) light source (1) for outputting CW light, a CW light input port (2) for receiving the CW light output from the CW light source (1), a signal input port (3) to which an input signal pulse is applied, a non-linear waveguide (5) in which the CW light and the input signal pulse are entered via a branch section (4), a delay interference circuit (6), and a signal output port (8) for outputting the light whose wavelength has been converted, wherein the delay interference circuit (6) is located between the non-linear waveguide and the said signal output port and is arranged to introduce a first delay to light from the CW input port and includes a branch section (61) for causing the input light to be branched in the ratio of one to one, an optical path (62) for transmitting one beam of the light which has been branched in the branch section (61), another optical path (63) for transmitting the other beam of the light which has been branched in the branch section (61), a combiner section (64) for combining the light which has been transmitted through the two optical paths (63, 62), and a delay interference section (65) for causing the light delayed in one of the optical paths (63, 62), due to an optical path difference between the two optical paths and the light transmitted through the other optical path, to interfere with each other, wherein a coherent length (ΔL_{C}=v_{g}/Δυ, where v_{g} is the travelling speed of the CW light in the delay interaction circuit), determined by a spectral line width (Δυ) of CW light output from the CW light source (1), is longer than an optical path difference (ΔL_{d}) between the two optical paths (63, 62) in the delay interference circuit (6) (ΔL_{C}>ΔL_{d}).

2. A wavelength converter as claimed in claim 1, including a branch section (66) for outputting light containing a required output signal pulse to a wavelength filter (7) and for branching light so that unnecessary light is output to an output port (9).

3. A wavelength converter as claimed in claim 1, wherein said waveguide (5) is arranged to cause a change of the non-linear refractive index.

4. A wavelength converter as claimed in claim 1, wherein the optical path difference (ΔL_{d}) in the delay interference circuit (6) has a relationship of ΔL_{d}=v_{g}T₀/2 (where T₀ is an interval between the input signal pulses) with a travelling speed (v_{g}) of the CW light in the delay interference circuit (6) and the input signal pulse applied to the signal input port (3).

5. A wavelength converter as claimed in claim 1, wherein an absorption type waveguide is used as the non-linear waveguide (5).

6. A wavelength converter as claimed in claim 1, wherein a semiconductor light amplifier is used as the non-linear waveguide (5).

## Patentansprüche

1. Wellenlängenkonverter, der aufweist: eine Dauerstrichlichtquelle (CW-Lichtquelle) (1) zum Ausgeben von CW-Licht, einen CW-Lichteingangsanschluß (2) zum Empfangen des von der CW-Lichtquelle (1) ausgegebenen CW-Lichts, einen Signaleingangsanschluß (3), an den ein Eingangssignalimpuls angelegt wird, eine nichtlinearen Wellenleiter (5), in den das CW-Licht und der Eingangssignalimpuls über einen Verzweigungsabschnitt (4) eintreten, eine Verzögerungsinterferenzschaltung (6) und einen Signalausgangsanschluß (8) zum Ausgeben des Lichts, dessen Wellenlänge konvertiert wurde, wobei die Verzögerungsinterferenzschaltung (6) zwischen dem nichtlinearen Wellenleiter und dem Signalausgangsanschluß angeordnet ist und derart eingerichtet ist, daß sie für Licht von dem CW-Eingangsanschluß eine erste Verzögerung einführt und aufweist: einen Verzweigungsabschnitt (61), um zu bewirken, daß das Eingangslicht im Verhältnis eins zu eins verzweigt wird, einen Lichtweg (62) zum Übertragen eines Strahls des Lichts, das in dem Verzweigungsabschnitt (61) verzweigt wurde, einen anderen Lichtweg (63) zum Übertragen des anderen Strahls des Lichts, das in dem Verzweigungsabschnitt (61) verzweigt wurde, einen Kombinatorabschnitt (64) zum Kombinieren des Lichts, das über die zwei Lichtwege (63, 62) übertragen wurde, und einen Verzögerungsinterferenzabschnitt (65), um zu bewirken, daß das in einem der Lichtwege (63, 62) aufgrund einer Lichtwegdifferenz zwischen den zwei Lichtwegen verzögerte Licht und das durch den anderen Lichtweg übertragene Licht miteinander interferieren, wobei eine Kohärenzlänge (ΔL_{C} = v_{g}/ΔU, wobei v_{g} die Ausbreitungsgeschwindigkeit des CW-Lichts in der Verzögerungsinterferenzschaltung ist), die durch eine spektrale Linienbreite (ΔU) von CW-Licht bestimmt ist, das von der CW-Lichtquelle (1) ausgegeben wird, länger als eine Lichtwegdifferenz (ΔL_{d}) zwischen den zwei Lichtwegen (63, 62) in der Verzögerungsinterferenzschaltung (6) ist (ΔL_{C} > ΔL_{d}).

2. Wellenlängenkonverter nach Anspruch 1, der einen Verzweigungsabschnitt (66) aufweist, um Licht, das einen erforderlichen Ausgangssignalimpuls umfaßt, an ein Wellenlängenfilter (7) auszugeben, und um Licht derart zu verzweigen, daß unnötiges Licht an einen Ausgangsanschluß (9) ausgegeben wird.

3. Wellenlängenkonverter nach Anspruch 1, wobei der Wellenleiter (5) derart eingerichtet ist, daß er eine Änderung des nichtlinearen Brechungsindex bewirkt.

4. Wellenlängenkonverter nach Anspruch 1, wobei die Lichtwegdifferenz (ΔL_{d}) in der Verzögerungsinterferenzschaltung (6) eine Beziehung von ΔL_{d} = v_{g}T₀/2, erfüllt (wobei T₀ ein Intervall zwischen den Eingangssignalimpulsen ist), wenn eine Ausbreitungsgeschwindigkeit (v_{g}) des CW-Lichts in der Laufzeitinterferenzschaltung (6) und der Eingangssignalimpuls an den Signaleingangsanschluß (6) angelegt werden.

5. Wellenlängenkonverter nach Anspruch 1, wobei ein absorbierender Wellenleiter als der nichtlineare Wellenleiter (5) verwendet wird.

6. Wellenlängenkonverter nach Anspruch 1, wobei ein Halbleiter-Lichtverstärker als der nichtlineare Wellenleiter (5) verwendet wird.

## Revendications

1. Convertisseur de longueur d'onde, incluant une source de lumière à onde entretenue (CW) (1) pour délivrer une lumière CW, un port d'entrée de lumière CW (2) pour recevoir la lumière CW délivrée par la source de lumière CW (1), un port d'entrée de signal (3) auquel une impulsion de signal d'entrée est appliquée, un guide d'onde non linéaire (5) dans lequel la lumière CW et l'impulsion de signal d'entrée sont entrées, à travers une section de branchement (4), un circuit d'interférence de retard (6), et un port de sortie de signal (8) pour délivrer la lumière dont la longueur d'onde a été convertie, dans lequel le circuit d'interférence de retard (6) est situé entre le guide d'onde non linéaire et ledit port de sortie de signal, et est configuré pour conférer un premier retard à la lumière issue du port d'entrée CW, et inclut une section de branchement (61) pour amener la lumière d'entrée à être divisée dans le rapport de un à un, un trajet optique (62) pour transmettre un faisceau de la lumière qui a été divisée dans la section de branchement (61), un autre trajet optique (63) pour transmettre l'autre faisceau de la lumière qui a été divisée dans la section de branchement (61), une section de multiplexage (64) pour mélanger la lumière qui a été transmise à travers les deux trajets optiques (63, 62), et une section d'interférence de retard (65) pour amener la lumière qui a été retardée dans l'un des deux trajets optiques (63, 62), sous l'effet d'une différence de trajet optique entre les deux trajets optiques, et la lumière transmise à travers l'autre trajet optique, à interférer l'une avec l'autre, dans lequel une longueur cohérente (ΔL_{C} = v_{g} / ΔU), où v_{g} est la vitesse de propagation de la lumière CW dans le circuit d'interaction de retard), déterminée par une largeur de raie spectrale (ΔU) de la lumière CW délivrée par la source de lumière CW (1), est plus longue qu'une différence de trajet optique (ΔL_{d}) entre les deux trajets optiques (63, 62) dans le circuit d'interférence de retard (6) (ΔL_{C} > ΔL_{d}).

2. Convertisseur de longueur d'onde selon la revendication 1, incluant une section de branchement (66) pour délivrer une lumière contenant une impulsion de signal de sortie requise à un filtre de longueur d'onde (7) et pour diviser la lumière de telle sorte qu'une lumière inutile soit délivrée à un port de sortie (9).

3. Convertisseur de longueur d'onde selon la revendication 1, dans lequel ledit guide d'onde (5) est configuré pour provoquer une variation de l'indice de réfraction non linéaire.

4. Convertisseur de longueur d'onde selon la revendication 1, dans lequel la différence de trajet optique (ΔL_{d}) dans le circuit d'interférence de retard (6) présente la relation ΔL_{d} = v_{g}T₀/2 (où T₀ est un intervalle entre les impulsions de signal d'entrée) avec une vitesse de propagation (v_{g}) de la lumière CW dans le circuit d'interférence de retard (6) et l'impulsion de signal d'entrée appliquée au port d'entrée de signal (3).

5. Convertisseur de longueur d'onde selon la revendication 1, dans lequel un guide d'onde du type à absorption est utilisé en tant que le guide d'onde non linéaire (5).

6. Convertisseur de longueur d'onde selon la revendication 1, dans lequel un amplificateur de lumière à semi-conducteur est utilisé en tant que le guide d'onde non linéaire (5).
